# EUROPEAN PATENT SPECIFICATION

(11) **EP 2 385 687 B1**
(45) Date of publication and mention of the grant of the patent: **06.06.2018**
(21) Application number: 11153020.0
(22) Date of filing: 02.02.2011
(51) Int. Cl.: H04M 1/2745

(54) **Mobile terminal and control method thereof**
Mobiles Endgerät und Steuerungsverfahren dafür
Terminal mobile et son procédé de contrôle

(30) Priority: 06.05.2010 KR 20100042564
(43) Date of publication of application: 09.11.2011
(73) Proprietor: LG ELECTRONICS INC., Yeongdeungpo-gu Seoul 150-721 (KR)
(72) Inventor: Ryu, Jihyoun, 153-801, Seoul (KR)
(74) Representative: Cabinet Plasseraud

(56) References cited:
- US-A1- 2006 256 959
- US-A1- 2009 037 477
- US-A1- 2009 185 763

## Description

### BACKGROUND

### Field

This document relates to a mobile terminal and a control method thereof and, more particularly, to a mobile terminal and a control method thereof for obtaining information about a person in a captured image through near field communication to achieve easy information exchange.

### Related Art

As the functions of terminals such as personal computers, laptop computers, cellular phones and the like are diversified, the terminals are constructed in the form of a multimedia player having multiple functions of capturing pictures or moving images, playing music, moving image files and games and receiving broadcasting programs. Examples and possible embodiments of the prior art may be found in US 2009/185763 A1, US 2006/256959 A1, and US 2009/037477 A1.

Terminals can be divided into mobile terminals and stationary terminals. The mobile terminals can be classified into handheld terminals and vehicle mount terminals according to whether users can personally carry the terminals.

To support and enhance functions of a terminal, it can be considered to improve a structural part and/or a software part of the terminal.

A variety of recent terminals including mobile terminals provide more complex and various functions.

### SUMMARY

An aspect of this document is to provide a mobile terminal and a control method thereof for obtaining information about a person in a captured image through near field communication to achieve easy information exchange.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.
FIG. 1 is a block diagram of a mobile terminal according to an embodiment of this document;
FIG. 2A is a front perspective view of the mobile terminal according to an embodiment of this document;
FIG. 2B is a rear perspective view of the mobile terminal according to an embodiment of this document;
FIGS. 2C and 2D illustrate forms of the mobile terminal and display screens according to various embodiments of this document;
FIG. 3 is a conceptional view for explaining a proximity depth of a proximity sensor;
FIG. 4 illustrates a configuration of a CDMA wireless communication system communicating with the mobile terminal shown in FIG. 1;
FIG. 5 is a flowchart showing an operation of the mobile terminal according to an embodiment of this document;
FIG. 6 is a flowchart of an operation of capturing an image of the other user, shown in FIG. 5;
FIG. 7 illustrates implementations of an operation of driving an application, shown in FIG. 6;
FIG. 8 illustrates the mobile terminal with a camera operating according to an operation of driving the camera, shown in FIG. 6;
FIG. 9 is a flowchart of an operation of acquiring information about the other user from a mobile terminal of the other user, shown in FIG. 5;
FIGS. 10, 11 and 12 illustrate an operation of searching for the mobile terminal of the other user, shown in FIG. 9;
FIGS. 13 and 14 illustrate operations of requesting the mobile terminal of the other user to provide information and receiving the requested information, shown in FIG. 9;
FIGS. 15, 16 and 17 illustrate an operation of receiving and transmitting information, shown in FIG. 9;
FIG. 18 illustrates a screen displaying the acquired information with the captured image;
FIGS. 19, 20, 21 and 22 illustrate an operation of processing the acquired information, shown in FIG. 5; and
FIG. 23 illustrates an operation of storing the processed information, shown in FIG. 5.

### DETAILED DESCRIPTION

This document will now be described more fully with reference to the accompanying drawings, in which exemplary embodiments of this document are shown. This document may, however, be embodied in many different forms and should not be construed as being limited to the embodiments set forth herein; rather, there embodiments are provided so that this disclosure will be thorough and complete, and will fully convey the concept of this document to those skilled in the art.

Hereinafter, a mobile terminal relating to this document will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

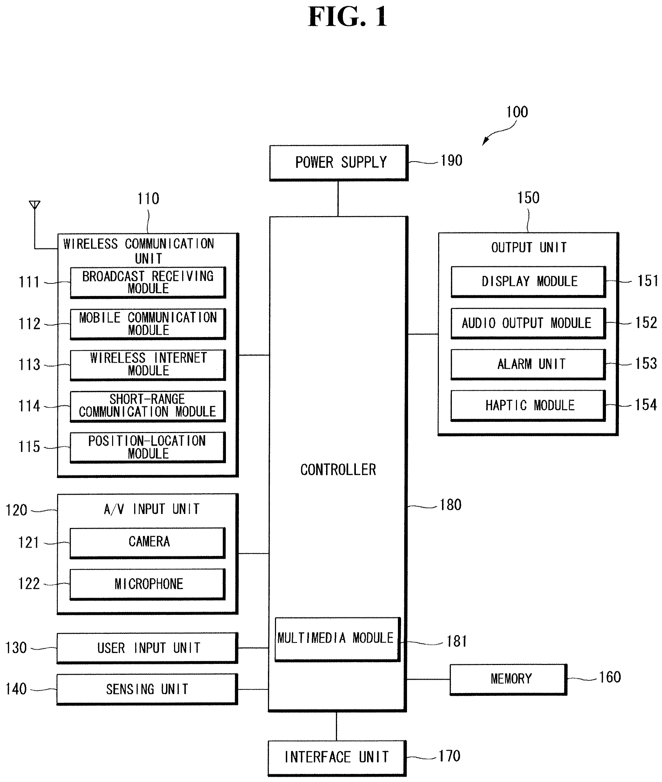

FIG. 1 is a block diagram of a mobile terminal 100 according to an embodiment of this document. The mobile terminal 100 can include a wireless communication unit 110, an audio/video (A/V) input unit 120, a user input unit 130, a sensing unit 140, an output unit 150, a memory 160, an interface unit 170, a controller 180, and a power supply 190. The components shown in FIG. 1 are not essential parts and the number of components included in the mobile terminal can be varied.

The components of the mobile terminal will now be described.

The wireless communication unit 110 can include at least one module that enables radio communication between the mobile terminal 100 and a radio communication system or between the mobile terminal 100 and a network in which the mobile terminal 100 is located. For example, the wireless communication unit 110 can include a broadcast receiving module 111, a mobile communication module 112, a wireless Internet module 113, a short-range communication module 114 and a position location module115.

The broadcast receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcast receiving module 111 receives broadcasting signals using various broadcasting systems. Particularly, the broadcast receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcast receiving module 111 can be constructed to be suited to broadcasting systems providing broadcasting signals other than the above-described digital broadcasting systems.

The broadcasting signals and/or broadcasting related information received through the broadcast receiving module 111 can be stored in the memory 160.

The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The short-range communication module 114 means a module for near field communication. Bluetooth, radio frequency identification (RFID), infrared data association (IrDA), ultra wideband (UWB) and ZigBee can be used as a near field communication technique.

The position location module115 confirms or obtains the position of the mobile terminal. A global positioning system (GPS) module is a representative example of the position location module115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time. Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display module 151.

The image frames processed by the camera 121 can be stored in the memory 160 or transmitted to an external device through the wireless communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. Furthermore, the sensing unit 140 can sense whether the power supply 190 supplies power and whether the interface unit 170 is connected to an external device. The sensing unit 140 can include a proximity sensor.

The output unit 150 generates visual, auditory or tactile output and can include the display module 151, an audio output module 152, an alarm unit 153 and a haptic module 154.

The display module 151 displays information processed by the mobile terminal 100. For example, the display module 151 displays UI or graphic user interface (GUI) related to a telephone call when the mobile terminal is in the call mode. The display module 151 displays a captured or/and received image, UI or GUI when the mobile terminal 100 is in the video telephony mode or the photographing mode.

The display module 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display module 151 can also be of the light transmission type. According to this structure, a user can see an object located behind the body of the mobile terminal 100 through an area of the body of the mobile terminal 100, which is occupied by the display module 151.

The mobile terminal 100 can include at least two display modules 151 according to constitution of the terminal. For example, the mobile terminal 100 can include a plurality of displays that are arranged on a single face at a predetermined distance or integrated. Otherwise, the plurality of displays can be arranged on different sides.

In the case where the display module 151 and a sensor sensing touch (referred to as a touch sensor hereinafter) form a layered structure, which is referred to as a touch screen hereinafter, the display module 151 can be used as an input device in addition to an output device. The touch sensor can be in the form of a touch film, a touch sheet and a touch pad, for example.

The touch sensor can be constructed such that it converts a variation in pressure applied to a specific portion of the display module 151 or a variation in capacitance generated at a specific portion of the display module 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display module 151.

Referring to FIG. 1, the proximity sensor 141 can be located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can be displayed on the touch screen.

The audio output module 152 can output audio data received from the wireless communication unit 110 or stored in the memory 160 in a call signal receiving mode, a telephone call mode or a recording mode, a speech recognition mode and a broadcast receiving mode. The audio output module 152 outputs audio signals related to functions (for example, a call signal incoming tone, a message incoming tone, etc.) performed in the mobile terminal 100. The audio output module 152 can include a receiver, a speaker, a buzzer, etc.

The alarm unit 153 outputs a signal for indicating generation of an event of the mobile terminal 100. Examples of events generated in the mobile terminal include receiving of a call signal, receiving of a message, input of a key signal, input of touch, etc. The alarm unit 153 can output signals in forms different from video signals or audio signals, for example, a signal for indicating generation of an event through vibration. The video signals or the audio signals can be also output through the display module 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to constitution of the mobile terminal.

The memory 160 can store a program for the operation of the controller 180 and temporarily store input/output data (for example, phone book, messages, still images, moving images, etc.). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface unit 170 serves as a path to all external devices connected to the mobile terminal 100. The interface unit 170 receives data from the external devices or power and transmits the data or power to the internal components of the mobile terminal 100 or transmits data of the mobile terminal 100 to the external devices. The interface unit 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a port.

The interface unit 170 can serve as a path through which power from an external cradle is provided to the mobile terminal 100 when the mobile terminal 100 is connected to the external cradle or a path through which various command signals inputted by the user through the cradle to the mobile terminal 100. The various command signals or power input from the cradle can be used as a signal for confirming whether the mobile terminal 100 is correctly set in the cradle.

The controller 180 controls the overall operation of the mobile terminal. For example, the controller 180 performs control and processing for voice communication, data communication and video telephony. The controller 180 can include a multimedia module 181 for playing multimedia. The multimedia module 181 can be included in the controller 180 or separated from the controller 180.

The controller 180 can perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

Various embodiments of this document can be implemented in a computer or similar device readable recording medium using software, hardware or a combination thereof, for example.

According to hardware implementation, the embodiments of this document can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. In some cases, the embodiments can be implemented by the controller 180.

According to software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

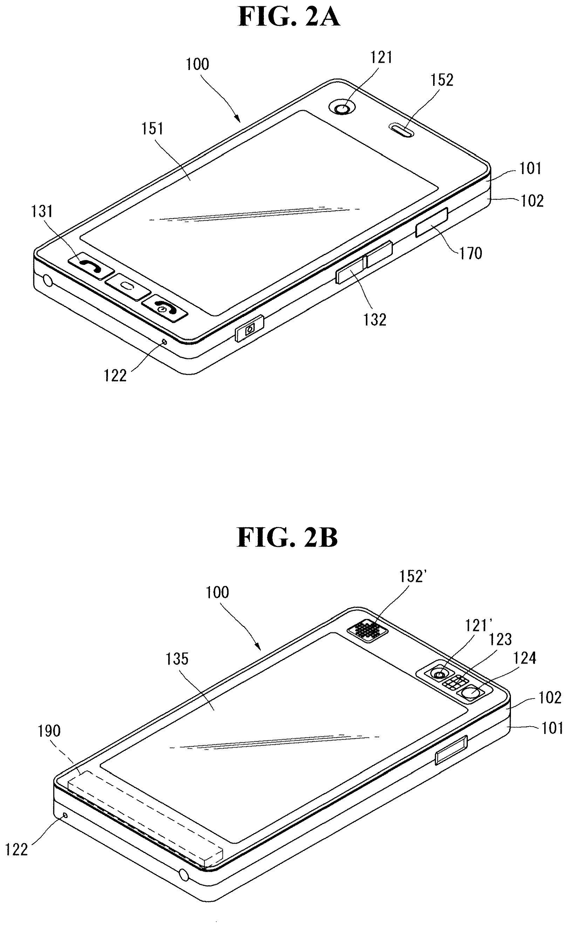

FIG. 2A is a front perspective view of a mobile terminal or a handheld terminal 100 according to an embodiment of this document.

The handheld terminal 100 has a bar type terminal body. However, this document is not limited to a bar type terminal and can be applied to terminals of various types including slide type, folder type, swing type and swivel type terminals having at least two bodies that are relatively movably combined.

The terminal body includes a case (a casing, a housing, a cover, etc.) forming the exterior of the terminal 100. In the present embodiment, the case can be divided into a front case 101 and a rear case 102. Various electronic components are arranged in the space formed between the front case 101 and the rear case 102. At least one middle case can be additionally arranged between the front case 101 and the rear case 102.

The cases can be formed of plastics through injection molding or made of a metal material such as stainless steel (STS) or titanium (Ti).

The display module 151, the audio output module 152, the camera 121, the user input unit 130/131 and 132, the microphone 122 and the interface unit 170 can be arranged in the terminal body, specifically, in the front case 101.

The display module 151 occupies most part of the main face of the front case 101. The audio output module 152 and the camera 121 are arranged in a region in proximity to one of both ends of the display module 151 and the user input unit 131 and the microphone 122 are located in a region in proximity to the other end of the display module 151. The user input unit 132 and the interface unit 170 are arranged on the sides of the front case 101 and the rear case 102.

The user input unit 130 is operated to receive commands for controlling the operation of the handheld terminal 100 and can include a plurality of operating units 131 and 132. The operating units 131 and 132 can be referred to as manipulating portions and employ any tactile manner in which a user operates the operating units 131 and 132 while having tactile feeling.

First and second operating units 131 and 132 can receive various inputs. For example, the first operating unit 131 receives commands such as start, end and scroll and the second operating unit 132 receives commands such as control of the volume of sound output from the audio output module 152 or conversion of the display module 151 to a touch recognition mode.

FIG. 2B is a rear perspective view of the handheld terminal shown in FIG. 2A according to an embodiment of this document.

Referring to FIG. 2A, a camera 121' can be additionally attached to the rear side of the terminal body, that is, the rear case 102. The camera 121' has a photographing direction opposite to that of the camera 121 shown in FIG. 2A and can have pixels different from those of the camera 121 shown in FIG. 2A.

For example, it is desirable that the camera 121 has low pixels such that it can capture an image of the face of a user and transmit the image to a receiving part in case of video telephony while the camera 121' has high pixels because it captures an image of a general object and does not immediately transmit the image in many cases. The cameras 121 and 121' can be attached to the terminal body such that they can be rotated or pop-up.

A flash bulb 123 and a mirror 124 are additionally arranged in proximity to the camera 121'. The flash bulb 123 lights an object when the camera 121' takes a picture of the object. The mirror 124 is used for the user to look at his/her face in the mirror when the user wants to self-photograph himself/herself using the camera 121'.

An audio output module 152' can be additionally provided on the rear side of the terminal body. The audio output module 152' can achieve a stereo function with the audio output module 152 shown in FIG. 2A and be used for a speaker phone mode when the terminal is used for a telephone call.

A broadcasting signal receiving antenna can be additionally attached to the side of the terminal body in addition to an antenna for telephone calls. The antenna 124 constructing a part of the broadcast receiving module 111 shown in FIG. 1 can be set in the terminal body such that the antenna 124 can be pulled out of the terminal body.

The power supply 190 for providing power to the handheld terminal 100 is set in the terminal body. The power supply 190 can be included in the terminal body or detachably attached to the terminal body.

A touch pad 135 for sensing touch can be additionally attached to the rear case 102. The touch pad 135 can be of a light transmission type as the display module 151. In this case, if the display module 151 outputs visual information through both sides thereof, the visual information can be recognized through the touch pad 135. The information output through both sides of the display module 151 can be controlled by the touch pad 135. Otherwise, a display is additionally attached to the touch pad 135 such that a touch screen can be arranged even in the rear case 102.

The touch pad 135 operates in connection with the display module 151 of the front case 101. The touch pad 135 can be located in parallel with the display module 151 behind the display module 151. The touch panel 135 can be identical to or smaller than the display module 151 in size.

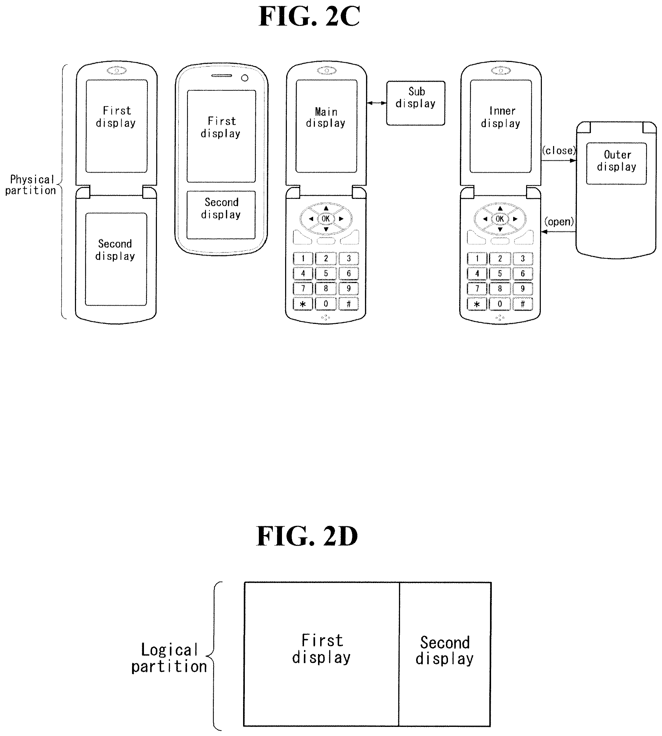

FIGS. 2C and 2D illustrate the mobile terminal 100 and the display module 151 according to various embodiments of this document.

Referring to FIG. 2C, the display module 151 can include a first display and a second display which are physically separated from each other. In a folder type or slide type mobile terminal having two bodies connected through a hinge or slide, the first display (or main display) can be formed on the inner face or outer face of one of the bodies and the second display (or sub display) can be formed on the inner face or outer face of the other body. The sub display is separated from the mobile terminal and detachably combined with the mobile terminal body through an interface to display data from the mobile terminal 100.

The display module 151 can include first and second displays which are logically separated from each other in a display panel, as illustrated in FIG. 2D.

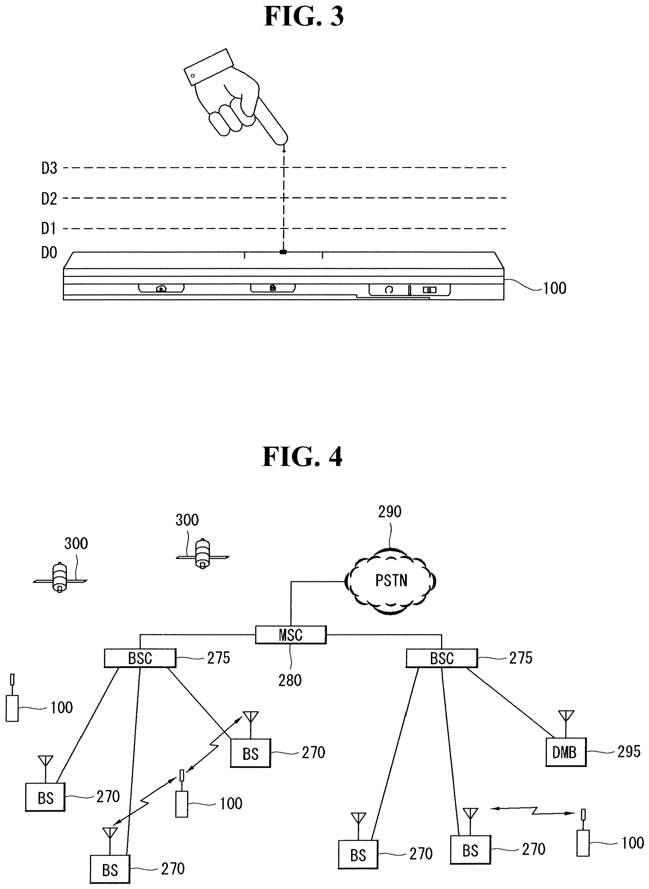

FIG. 3 is a conceptional view for explaining a proximity depth of the proximity sensor.

As shown in FIG. 3, when a pointer such as a user's finger approaches the touch screen, the proximity sensor located inside or near the touch screen senses the approach and outputs a proximity signal.

The proximity sensor can be constructed such that it outputs a proximity signal according to the distance between the pointer approaching the touch screen and the touch screen (referred to as "proximity depth").

The distance in which the proximity signal is output when the pointer approaches the touch screen is referred to as a detection distance. The proximity depth can be known by using a plurality of proximity sensors having different detection distances and comparing proximity signals respectively output from the proximity sensors.

FIG. 3 shows the section of the touch screen in which proximity sensors capable of sensing three proximity depths are arranged. Proximity sensors capable of sensing less than three or more than four proximity depths can be arranged in the touch screen.

Specifically, when the pointer completely comes into contact with the touch screen (D0), it is recognized as contact touch. When the pointer is located within a distance D1 from the touch screen, it is recognized as proximity touch of a first proximity depth. When the pointer is located in a range between the distance D1 and a distance D2 from the touch screen, it is recognized as proximity touch of a second proximity depth. When the pointer is located in a range between the distance D2 and a distance D3 from the touch screen, it is recognized as proximity touch of a third proximity depth. When the pointer is located at longer than the distance D3 from the touch screen, it is recognized as cancellation of proximity touch.

Accordingly, the controller 180 can recognize the proximity touch as various input signals according to the proximity distance and proximity position of the pointer with respect to the touch screen and perform various operation controls according to the input signals.

Referring to FIG. 4, a CDMA wireless communication system includes mobile terminals 100, base stations 270, base station controllers 275, and a mobile switching center 280. The mobile switching center 280 is connected to a public switch telephone network (PSTN) 290. The mobile switching center 280 is connected to the base station controllers 275. The base station controllers 275 are connected to the base stations 270 through backhaul lines. The backhaul lines may be constructed according to E1/T1, ATM, IP, PPP, frame relay, HDSL, ADSL or xDSL well-known in the art. The CDMA wireless communication system may include at least two base station controllers 275.

Each base station 270 may include a sector or sectors and each sector may include an omnidirectional antenna or an antenna adjusted to a specific radiation direction from the base station 270. Otherwise, each sector may include two diversity reception antennas. Each base station 270 is constructed to have frequency assignments, and the frequency assignments may have specific spectra (for example, 1.25MHz and 5MHz).

Intersection of sectors and frequency assignments may be referred to a CDMA channel.

The base stations 270 may be referred to as base station transceiver subsystems (BTSs). "Base station" may be used as a term that collectively designates the base station controller 275 and one or more base stations 270 in several examples. Furthermore, the base stations 270 may be referred to as "cell sites". Otherwise, individual sectors of a given base station 270 may be referred to as cell sites.

A terrestrial DMB transmitter 295 can transmit broadcasting signals to the mobile terminals 100 operating in the CDMA wireless communication system. The broadcast receiving module 111 of each mobile terminal 100 is constructed to receive the broadcasting signals transmitted from the DMB transmitter 295. This can be similarly applied to different types of broadcast and multicast signaling as described above.

FIG. 4 illustrates global positioning system (GPS) satellites 300. These satellites 300 can track the positions of some or all of the mobile terminals 100. Although two satellites are shown in FIG. 4, position information can be obtained from less than or more than two satellites. In addition, other position-tracking techniques (for example, position-tracking techniques that can substitute for GPS technique or can be added to the GPS technique) can be used. If required, some or all of the GPS satellites 300 can support satellite DMB transmission separately or additionally.

When the CDMA wireless communication system operates, the base stations 270 receive reverse link signals from the mobile terminals 100. The mobile terminals 100 may be in a state that the mobile terminals 100 are making calls, sending messages or performing other communications. The reverse link signals received by the base stations 270 are processed by the base stations 270. The processed data is transmitted to the base station controllers 275 connected to the base stations 270. The base station controllers 275 provide call resource allocation and mobility management functionality including soft handoffs between the base stations 270. Furthermore, the base station controllers 275 transmit the received data to the mobile switching center 280. The mobile switching center 280 provides additional routing services for interfacing with the PSTN 290. Similarly, the PSTN 290 interfaces with the mobile switching center 280, and the mobile switching center 280 interfaces with the base station controllers 275. The base station controllers 275 control the base stations 270 to transmit forward link signals to the mobile terminals 100.

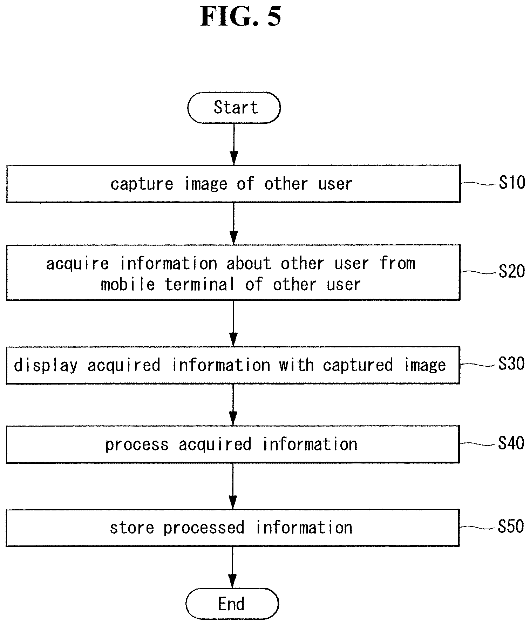

FIG. 5 is a flowchart showing an implementation of an operation of the mobile terminal 100 shown in FIG. 1.

Referring to FIGS. 1 and 5, the controller 180 of the mobile terminal 100 may perform an operation S10 of capturing an image of the other user.

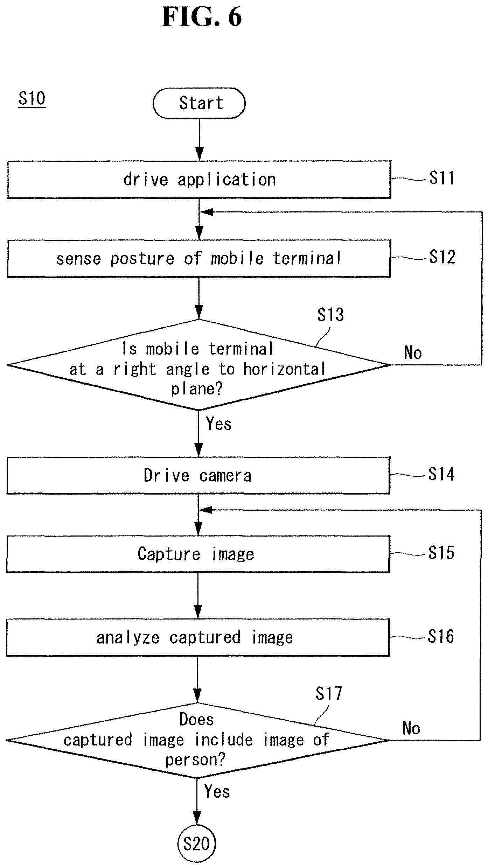

The other user's image may be captured through the camera 121 of the mobile terminal 100. The mobile terminal 100 may include multiple cameras. For example, the mobile terminal 100 can include a camera that is provided to the front side of the mobile terminal 100 and faces the user of the mobile terminal 100 and a camera that is provided to the backside of the mobile terminal 100 and faces the other user. The other user's image may be generally captured through the camera provided to the backside of the mobile terminal 100 although the camera that captures the other user's image can be changed according to how the user holds the mobile terminal 100. The other user's image may be captured in such a manner that the user operates the camera 121 or the controller 180 operates the camera 121 in an appropriate situation. The controller 180 may estimate the posture of the mobile terminal 100 through an acceleration sensor or a geomagnetic sensor included in the sensing unit 140. That is, the controller 180 can estimate whether the mobile terminal 100 is in a portrait position or in a landscape position and, if the mobile terminal 100 is the landscape position, whether the backside of the mobile terminal 100 faces upward or downward. Accordingly, the controller 180 can control the camera 121 to be automatically activated when the mobile terminal is in the portrait position. For example, the camera 121 can be activated when the photographing face of the camera 121 is parallel with the horizontal plane or is in a predetermined angle range from the horizontal plane. The camera 121 can capture an image when activated. The controller 180 may analyze the captured image and determine whether the captured image includes an image of a person. When the captured image includes the image of the person, the controller 180 may determine that the image of the person to be the other user's image. In this manner, the controller 180 can automatically capture the other user's image. Furthermore, the user of the mobile terminal 100 may aim the camera 121 at the other user and select a photographing key to capture the other user's image. The operation S10 of capturing the other user's image will be described in more detail with reference to FIG. 6.

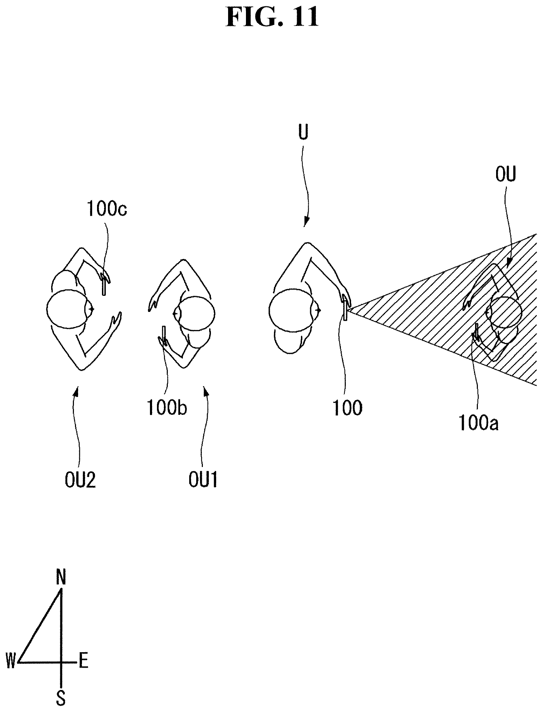

After the other user's image is captured, information about the other user may be acquired from the mobile terminal (100a shown in FIG. 11) of the other user in operation S20.

The other user may have the mobile terminal (100a shown in FIG. 11). The mobile terminal (100a shown in FIG. 11) of the other user may be an electronic device having a communication function. The mobile terminal 100 of the user may communicate with the mobile terminal (100a shown in FIG. 11) of the other user to acquire the information about the other user.

The mobile terminal (100a shown in FIG. 11) of the other user may be determined through various methods. For example, the captured image is analyzed to search for an electronic device storing an image corresponding to the captured image, the direction in which the image is captured is recognized to search for an electronic device existing in the direction, or all of electronic devices around the mobile terminal 100 are searched and displayed and the user selects one of the displayed electronic devices. The information about the other user may include the name, telephone number, email address, facsimile number, home page address, home address, work place address, social network service (SNS) ID, etc. of the other user. The information about the other user may be acquired through near field communication. That is, Bluetooth, RFID, infrared data association, UWB, ZigBee, etc. using the short-range communication module 114 may be used to acquire the information about the other user. Paring for using Bluetooth may be automatically performed.

When the information about the other user is acquired from the mobile terminal (100a shown in FIG. 11) of the other user, the acquired information may be displayed with the captured image in operation S30.

The controller 180 may display the information acquired in real time on the captured image. That is, the information related to the image captured through the camera 121 is displayed on the captured image, and thus the user can intuitively recognize the information about the other user. A technique of combining an image and information related to the image and displaying the image with the information may be referred to as augmented reality (AR). The controller 180 of the mobile terminal 100 can realize AR that recognizes the image captured through the camera 121 and displays the information about the other user based on the image recognition, which will be described in detail later.

When the acquired information is displayed with the captured image, the acquired information may be processed in operation S40.

The information about the other user, acquired from the mobile terminal (100a shown in FIG. 11) of the other user, may include the name, telephone number, email address, facsimile number, home page address, home address, work place address, social network service (SNS) ID, etc. of the other user, as described above. Among these information, information in which the user of the mobile terminal 100 is interested may be limited. For example, the user of the mobile terminal 100 may want to semi-permanently store only the name and telephone number of the other user in the memory 160 of the mobile terminal 100. In this case, the user may perform an information processing operation for selecting only required information from the acquired information about the other user. The information processing operation may be performed by a user's touching operation. For example, when the address among displayed information is not needed, the user can touch the address to delete the address from the display module 151. The information processing operation will be described in more detail later.

When the acquired information has been processed, the processed information may be stored in operation S50.

The user may store the processed information in the memory 160. The information stored in the memory 160 may be information displayed on the display module 151 at that point. That is, information selected from the acquired information and the other user' image may be captured and stored. Furthermore, the information may be stored such that the information corresponds to the attributes of fields of a phonebook previously stored in the memory 160. For example, if the phonebook has telephone number, address and email fields, the acquired information may be stored in a field corresponding to the information. The memory 160 may semi-permanently store the information. The information stored in the memory 160 may be re-used according to a user's selection or a control operation of the controller 180.

FIG. 6 is a flowchart showing the operation S10 of capturing the image of the other user's, shown in FIG. 5.

Referring to FIG. 6, the operation (S10 shown in FIG. 5) of capturing the image of the other user may include an application driving operation S11.

The operations of capturing the image of the other user, acquiring the information about the other user, processing the acquired information and storing the processed information may be performed through an application. The application may be driven through various methods, which will be described in detail later. The application may be composed of a single module or multiple modules respectively performing different functions. The application may be stored in the memory 160 of the mobile terminal 100. The application may be stored in the memory 160 in the process of manufacturing the mobile terminal 100 or received through the wireless communication unit 110 and installed by the user.

When the application is driven, the posture of the mobile terminal 100 may be sensed in operation S12.

The sensing unit 10 of the mobile terminal 100 may include a geomagnetic sensor, an acceleration sensor, a global navigation satellite system (GNSS) sensor, etc. The geomagnetic sensor may sense the magnetic force connecting the magnetic poles of the earth to sense which direction the reference axis of the mobile terminal 100 faces. The acceleration sensor may sense the direction to which the mobile terminal 100 moves from a specific position and the moving velocity of the mobile terminal 100. The GNSS sensor may receive a signal from a satellite revolving around the earth in a specific orbit to calculate the absolute coordinates of the mobile terminal 100 on the surface of the earth. A representative of the GNSS sensor is a GPS sensor. The controller 180 may determine the posture of the mobile terminal 100 according to a combination of the geomagnetic sensor, acceleration sensor and GPS sensor. That is, the controller 180 can be aware of the angle between the horizontal plane and the body of the mobile terminal 100 and find out the direction of the camera 121 provided to the backside of the mobile terminal 100 from the angle.

When the posture of the mobile terminal 100 is sensed, it may be determined whether the mobile terminal 100 is at a right angle to the horizontal plane in operation S13.

If the mobile terminal 100 is at a right angle to the horizontal plane, it may be considered that the camera 121 provided to the outside of the mobile terminal 100 faces the other user. That is, it can be determined that the user holds the mobile terminal 100 and aims the camera 121 at the other user.

When the mobile terminal 100 is at a right angle to the horizontal plane, the camera 121 may be operated in operation S14.

When mobile terminal 100 is at a right angle to the horizontal plane, it can be considered that the user aims the camera 121 at the other user to capture the image of the other user, as described above. In this state, the controller 180 may control the camera 121 to operate. That is, the camera 121 activates the camera 121.

When the camera 121 is operated, an operation S15 of capturing the image, an operation S16 of analyzing the captured image and an operation S17 of determining whether the captured image include an image of a person may be performed.

The image captured by the camera may include various images. The controller 180 may analyze the captured image to determine whether the captured image includes an image of a person through various logics. For example, the controller 180 can determine whether the captured image includes an image of a person by sensing a skin color or the position of a relatively dark eye.

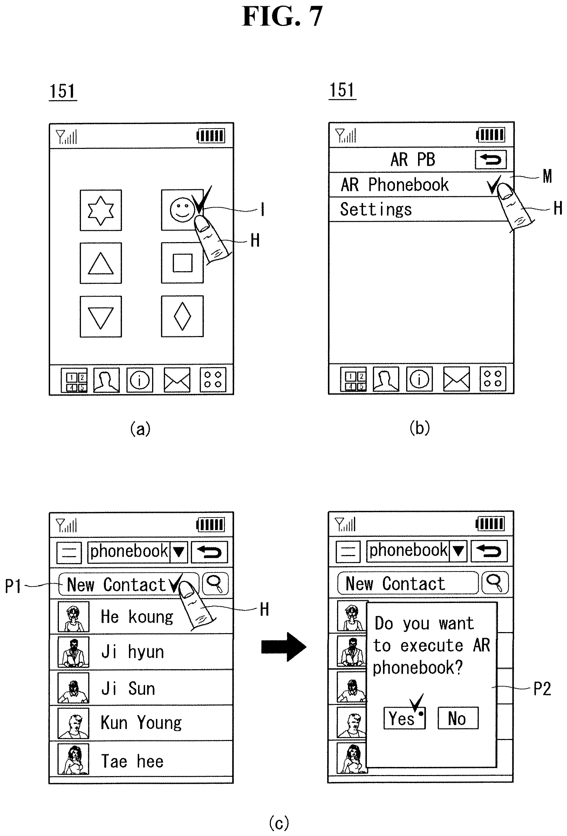

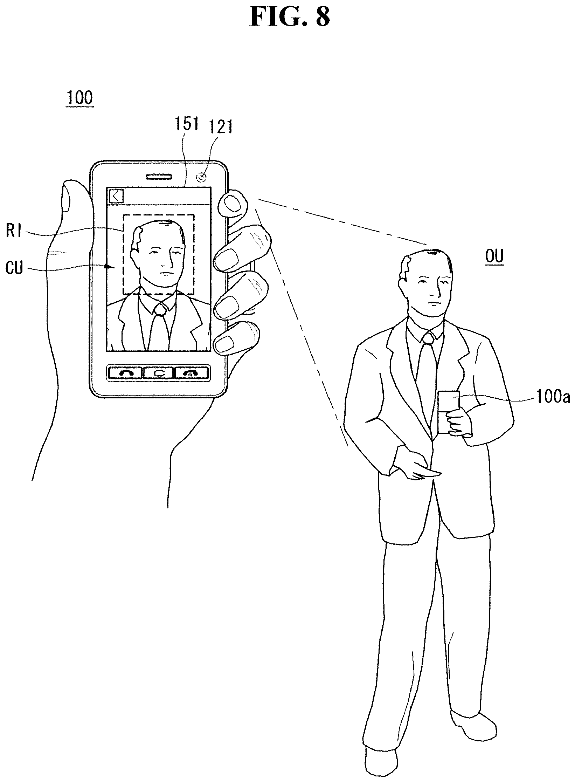

FIG. 7 illustrates implementations of the operation of driving the application, shown in FIG. 6 and FIG. 8 illustrates the operating state of the mobile terminal 100 when the camera 121 is operated according to the operation shown in FIG. 6.

As shown in FIGS. 7 and 8, the controller 180 of the mobile terminal 100 may drive the application to capture the image of the other user.

As shown in FIG. 7, the application for performing a series of operations according to an embodiment of this document can be driven through various methods.

Referring to FIG. 7(a), the display module 151 of the mobile terminal 100 may display icons corresponding to various applications. The user may select an icon I corresponding to a specific application using a finger H to perform a series of operations according to an embodiment of this document.

Referring to FIG. 7(b), the display module 151 of the mobile terminal 100 may display a menu including an application list. The user may select a desired application from the application list using the finger H.

Referring to FIG. 7(c), the mobile terminal 100 may execute a phonebook display function. The display module 151 may display information about other people, previously stored in the memory 160. Here, the information about other people may be displayed with pictures of the people. The user may select a first button P1 to store the phone number of a new person in the phonebook.

When the user selects the first button P1, the display module 151 may display a second pop-up window P2. The second pop-up window P2 may be a window for confirming whether or not an AR phonebook application is executed. When the user selects an AR phonebook application execution button, the AR phonebook application may be executed.

Referring to FIG. 8, the user may photograph the other user OU through the camera 121 provided to the backside of the mobile terminal 100. The image captured by the camera 121 may be displayed on the display module 151 as a captured image CU. The controller 180 may determine whether the captured image CU includes the image of the other user OU. When the captured image CU includes the image of the other user OU, an indicator RI may be indicated. That is, the user can be aware that the captured image CU includes the image of the other user through the indicator RI. Although the face of the other user in the captured image CU is recognized by the indicator RI in FIG. 8, the controller 180 may recognize the overall body shape of the other user and indicate it through the indicator RI.

The other user OU photographed through the camera 121 of the mobile terminal 100 may have his/her mobile terminal 100a. The mobile terminal 100 can not only capture the image of the other user and display the image but also receive information about the other user through communication with the mobile terminal 100a of the other user and display the information. Accordingly, the user can obtain the information about the other user.

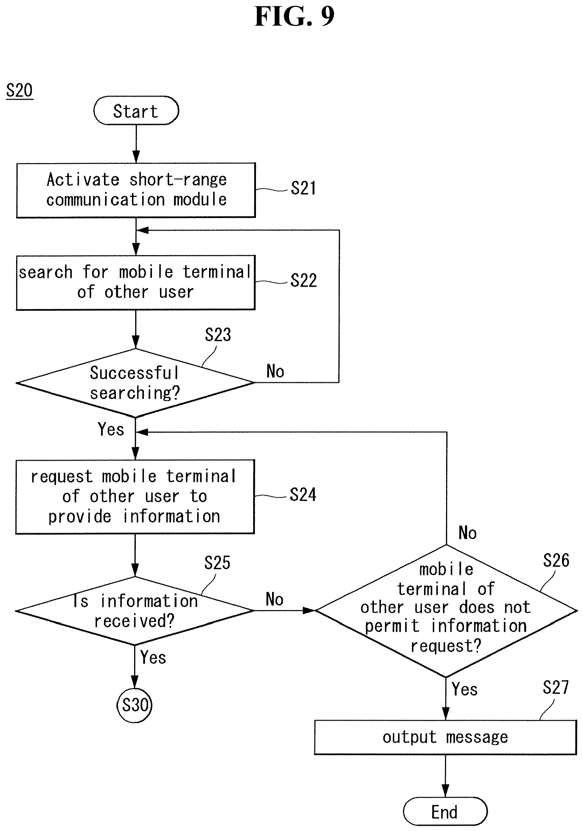

FIG. 9 is a flowchart illustrating the operation S20 of acquiring the information about the other user from the mobile terminal of the other user, shown in FIG. 5, in detail. The operation S20 of acquiring the information about the other user is described with reference to FIGS. 1 and 9.

The operation S20 of acquiring the information about the other user from the mobile terminal (100a shown in FIG. 11) of the other user may include an operation S21 of activating the short-range communication module 114.

The short-range communication module 114 is a module for near field communication. The near field communication may include Bluetooth, RFID, IrDA, UWB, ZigBee, ultrasonic wave, etc. A communication method using UWB directly uses a very short impulse for communication. The communication method using UWB can omit modulating and demodulating functions used in the conventional wireless communication, and thus the price and power consumption of communication equipment can be decreased. A communication method using ZigBee uses a ZigBee sensor network. ZigBee is low-speed wireless PAN technology according to IEEE 802.15.4 standard. ZigBee can operate in a low-power environment compared to Bluetooth. In addition, ZigBee can support connection of maximum 65536 nodes so as to easily construct a network.

When the short-range communication module 114 is activated, an operation S22 of searching for the mobile terminal (100a shown in FIG. 11) of the other user may be performed.

The location of the mobile terminal (100a shown in FIG. 11) of the other user may be searched based on the orientation of the mobile terminal 100 of the user, the relative location of the user and the other user, etc. The orientation of the mobile terminal 100 may be sensed using the geomagnetic sensor, acceleration sensor, GPS sensor or the like, as described above. The relative location of the user and the other user may be detected through triangulation although the relative location of the user and the other user depends on the communication method of the short-range communication module 114.

If the orientation of the mobile terminal 100 and the location of the other user are detected, the controller 180 can determine the location of the other user, currently photographed by the mobile terminal 100, based on the position of the mobile terminal 100. Accordingly, the mobile terminal 100 can search for the mobile terminal (100a shown in FIG. 11) of the other user.

When the mobile terminal (100a shown in FIG. 11) of the other user is successfully searched in operation S23, the searched mobile terminal (100a shown in FIG. 11) of the other user may be requested to provide information in operation S24.

The other user of the searched mobile terminal (100a shown in FIG. 11) may set contents and range of information to be provided before the searched mobile terminal (100a shown in FIG. 11) is requested to provide the information. For example, the other user can set contents and range of the information such that only the name and phone number will be provided or set the contents and range of the information such that no information will be provided to a specific person. The mobile terminal (100a shown in FIG. 11) of the other user can respond to the request based on the previously set contents.

When the requested information is received from the mobile terminal (100a shown in FIG. 11) in operation S25, the information may be displayed with the captured image (in operation S30 shown in FIG. 5).

When the requested information is not received from the mobile terminal (100a shown in FIG. 11) in operation S25, it may be determined whether the mobile terminal (100a shown in FIG. 11) of the other user does not permit the information to be provided in operation S26.

The other user of the mobile terminal (100a shown in FIG. 11) can set the mobile terminal such that information is not provided to a mobile terminal of a specific user or mobile terminals of users other than the specific user. In this case, accordingly, the mobile terminal (100a shown in FIG. 11) of the other user may not respond to the request or may not permit the information to be provided even when the mobile terminal (100a shown in FIG. 11) is requested to provide the information.

When it is determined that the mobile terminal (100a shown in FIG. 11) of the other user does not permit the information to be provided, the mobile terminal 100 may output a related message in operation S27.

The related message may be displayed through the display module 151 or output through the audio output module 152.

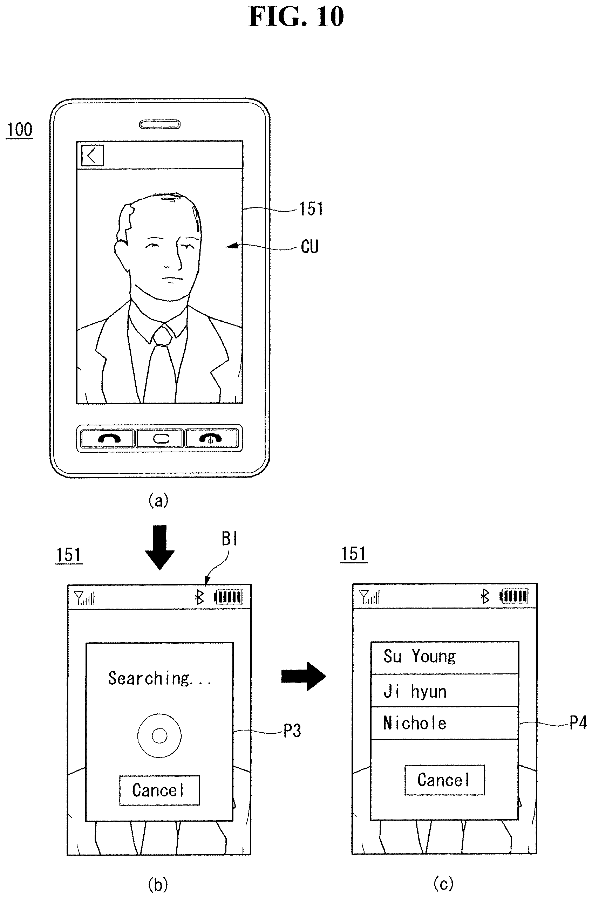

FIGS. 10, 11 and 12 illustrate the operation of searching for the mobile terminal of the other user, shown in FIG. 9.

Referring to FIGS. 10, 11 and 12, the mobile terminal 100 may activate the short-range communication module 114 shown in FIG. 1 and search for the mobile terminal 100a of the other user currently photographed by the mobile terminal 100.

Referring to FIG. 10 (a), the display module 151 of the mobile terminal 100 may display the captured image CU of the other user OU.

Referring to FIG. 10 (b), the display module 151 may display a Bluetooth icon BI that indicates activation of Bluetooth communication corresponding to one of near field communication methods. That is, activation of the short-range communication module (114 shown in FIG. 1) can be confirmed through the Bluetooth icon BI. The controller 180 may search for a device belonging to the other user OU currently photographed and display the searching state through a third pop-up window P3.

Referring to FIG. 10 (c), the display module 151 may display devices in proximity to the mobile terminal 100, which are searched through the short-range communication module (114 shown in FIG. 1), through a fourth pop-up window P4. The user can select the other user with reference to the displayed devices. Although the devices located around the user are searched and displayed in FIG. 10(c), it is also possible to sense the orientation of the mobile terminal 100 and automatically connect the mobile terminal 100 with the device of the other user OU, as described above.

Referring to FIG. 11, the user U may aim the mobile terminal 100 at the other user OU to photograph the other user OU. Here, there may be first and second other users OU1 and OU2 respectively having first and second terminals 100b and 100c around the user U.

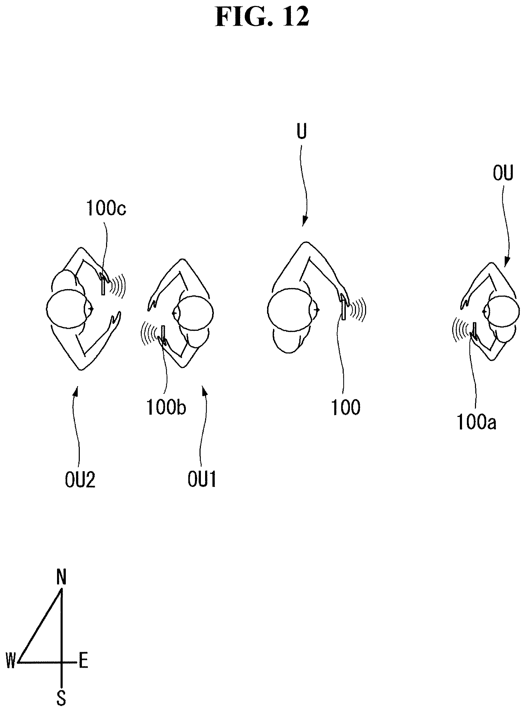

Referring to FIG. 12, the mobile terminal 100 of the user U may perform near field communication to search for the mobile terminal 100a of the other user OU. Here, the first and second terminals 100b and 100c in addition to the mobile terminal 100a of the other user OU may respond to the mobile terminal 100.

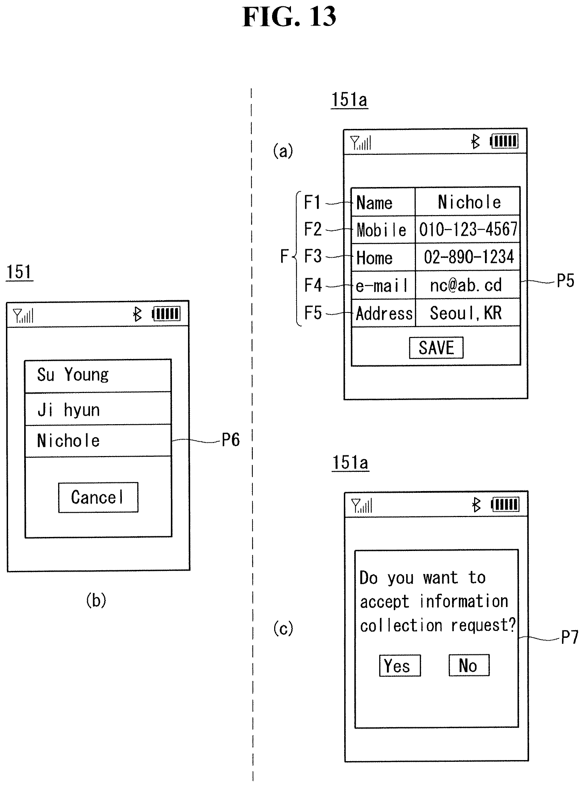

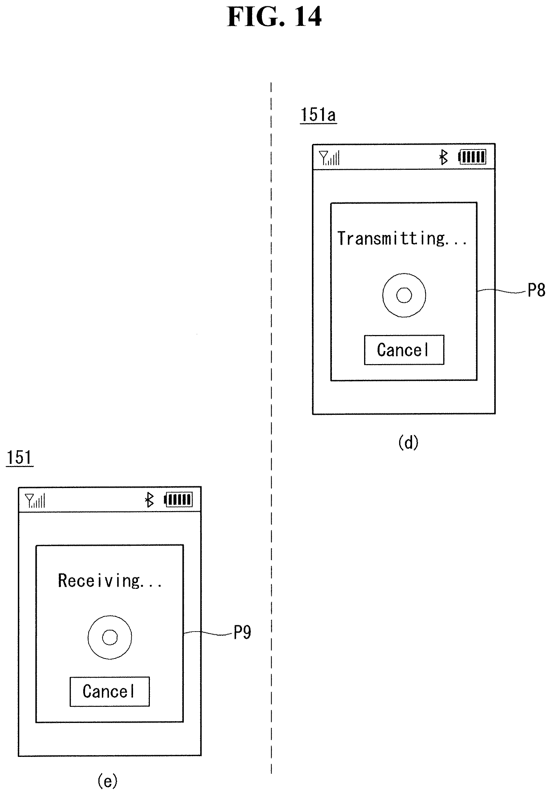

FIGS. 13 and 14 illustrate the operations of requesting the mobile terminal of the other user to provide information and receiving the requested information, shown in FIG. 9.

As shown in FIGS. 13 and 14, information may be collected from the mobile terminal (100a shown in FIG. 11) of the other user.

Referring to FIG. 13 (a), the other user (OU shown in FIG. 11) may previously set information which will be transmitted. For example, the other user may previously set first through fifth fields F1 through F5 respectively corresponding to the name, mobile phone number, home phone number, email address and address, which are displayed in a fifth pop-up window P5. The information included in the first through fifth fields F1 through F5 may be transmitted to the user at the moment when the mobile terminal (100a shown in FIG. 11) is requested to transmit the information.

Referring to FIG. 13 (b), the display module 151 of the mobile terminal 100 may display information about electronic devices belonging to people around the mobile terminal 100 in a sixth pop-up window P6. Though the device information displayed in the sixth pop-up window P6 is represented by people's names in FIG. 13 (b), the device information may be represented by device names. The user may select the other user (OU shown in FIG. 11) currently photographed from the people displayed in the sixth pop-up window P6. The operation of selecting the other user, shown in FIG. 13 (b), may be omitted and the other user may be automatically selected in consideration of the orientation of the mobile terminal 100, as described above.

Referring to FIG. 13 (c), the display module 151a of the mobile terminal (100a shown in FIG. 11) of the other user (OU shown in FIG. 11) may display a seventh pop-up window P7. The seventh pop-up window P7 may inquire whether to accept an information collection request. However, if the other user (OU shown in FIG. 11) sets acceptance or refusal for a specific person in advance, the operation shown in FIG. 13 (c) may be omitted.

Referring to FIG. 14 (d), if the other user permits the information to be transmitted, the display module 151a of the mobile terminal (100a shown in FIG. 11) of the other user (OU shown in FIG. 11) may display an eighth pop-up window P8. The eighth pop-up window P8 may display the information transmitting state.

Referring to FIG. 14 (e), the display module 151 of the mobile terminal 100 receiving the information may display a ninth pop-up window P9. The ninth pop-up window P9 may display the information receiving state.

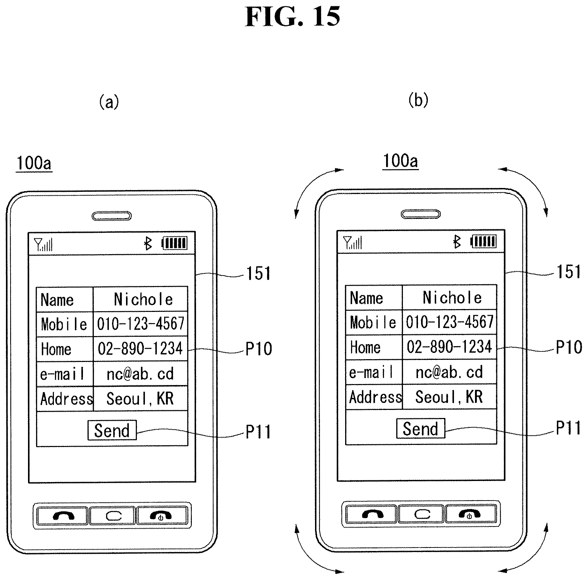

FIGS. 15, 16 and 17 illustrate the operation of receiving and transmitting information, shown in FIG. 9.

As shown in FIGS. 15, 16 and 17, information may be transmitted and received through various methods. Particularly, FIGS. 15, 16 and 17 show a case that information is transmitted through an active operation of the other user.

Referring to FIG. 15 (a), the other user (OU shown in FIG. 11) may edit and store information, which will be transmitted when requested, in the mobile terminal 100a. When the mobile terminal 100a is requested to transmit the information, a screen for transmitting the information may be displayed. The other user may select an eleventh pop-up window P11 corresponding to a transmitting button to start transmission of the information.

Referring to FIG. 15 (b), the other user (OU shown in FIG. 11) may shake the mobile terminal 100a when requested to transmit the information. When the mobile terminal 100a is shaken, the acceleration sensor can sense the shaking. When the acceleration sensor senses the shaking of the mobile terminal 100a, the controller of the mobile terminal 100a can start to transmit the information.

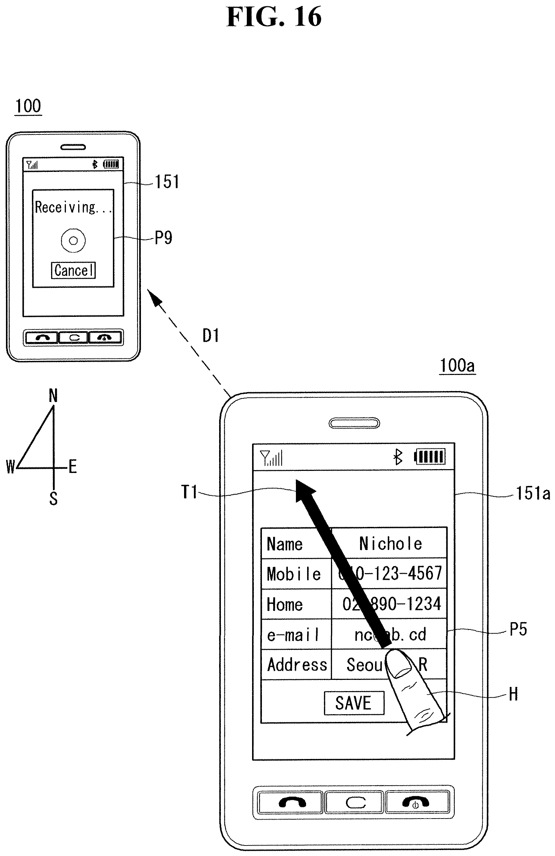

Referring to FIG. 16, the information may be transmitted through a touching operation. The other user may touch the display module 151a of the mobile terminal 100a in a first touch direction T1. The first touch direction T1 may correspond to the direction in which the mobile terminal 100 to which the information will be transmitted from the mobile terminal 100a is located. When the other user touches the display module 151a in the first touch direction T1, the information of the mobile terminal 100a may be transmitted to the mobile terminal 100. That is, the other user can transmit the information through intuitive touch.

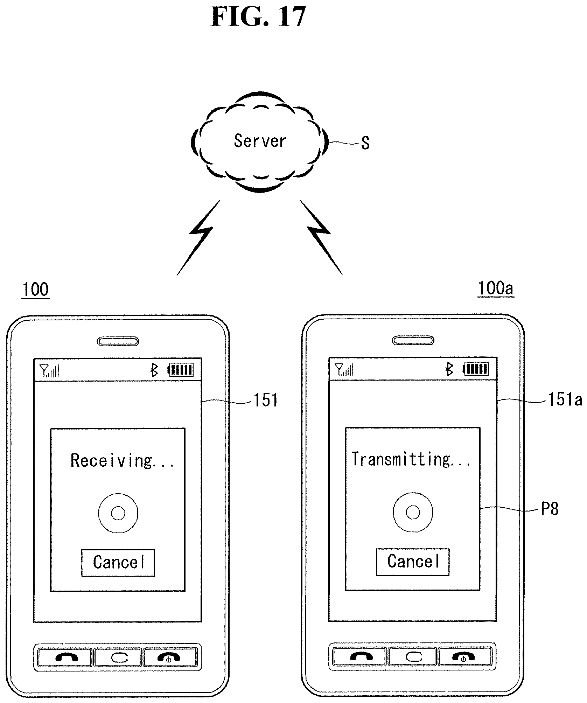

Referring to FIG. 17, the information may be transmitted through a server S. That is, if the mobile terminal 100 and the mobile terminal 100a are connected to each other through the Internet, the information can be transmitted through the server S using the Internet.

The mobile terminal 100 may receive the information of the mobile terminal 100a through the server S. The mobile terminal 100a may upload the information to the server S. The server S may relay the information between the mobile terminal 100 and the mobile terminal 100a or process the information received from the mobile terminal 100a and store the processed information. Position information of the mobile terminal 100a may be transmitted together with the information about the other user of the mobile terminal 100a through the server S.

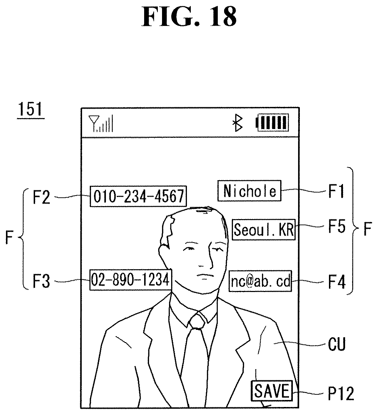

FIG. 18 illustrates the captured image and the acquired information displayed according to the operation S30 of FIG. 5.

Referring to FIG. 18, the display module 151 may display fields F corresponding to the information received from the mobile terminal (100a shown in FIG. 11) of the other user with the captured image CU.

The captured image CU may correspond to the image of the other user (OU shown in FIG. 11). The controller (180 shown in FIG. 1) may analyze the image obtained through the camera (121 shown in FIG. 1), as described above. The controller (180 shown in FIG. 1) may extract the image of the other user (OU shown in FIG. 11) from the analyzed image or recognize the outline of the image of the other user in the analyzed image. The captured image CU may be a still picture or a moving picture obtained by continuously photographing the other user.

The information may be arranged in the captured image CU. For example, the controller (180 shown in FIG. 1) can arrange the first through fifth fields F1 through F5 around the head of the captured image CU. If the captured image CU is a moving picture, the controller (180 shown in FIG. 1) may continuously analyze the moving picture in real time to recognize the head shape. Accordingly, the information can be effectively arranged around the head of the captured image CU even if the size and angle of the captured image CU are slightly changed as the camera (121 shown in FIG. 1) moves.

The fields F displayed on the display module 151 include the first through fifth fields F1 through F5. The first through fifth fields F1 through F5 may respectively correspond to the name, mobile phone number, home phone number, email address and address of the other user. Though the number and detailed contents of the fields F may be different from those shown in FIG. 18, the fields F include the first through fifth fields F1 through F5 in the following description for convenience of explanation. The first through fifth fields F1 through F5 may be arranged distant from one another in the captured image CU.

The display module 151 may display a twelfth pop-up window P12. The twelfth pop-up window P12 may correspond to a button for determining whether to store the fields F displayed on the display module 151 in the memory (160 shown in FIG. 1). For example, when the twelfth pop-up window P12 is selected while the first through fifth fields F1 through F5 are displayed, as shown in FIG. 18, the information corresponding to the first through fifth fields F1 through F5 can be stored in the memory (160 shown in FIG. 1). The user may process the displayed fields F. For example, the user may store only the first, second, fourth and fifth fields F1, F2, F4 and F5. The operation of processing displayed information will now be explained in detail.

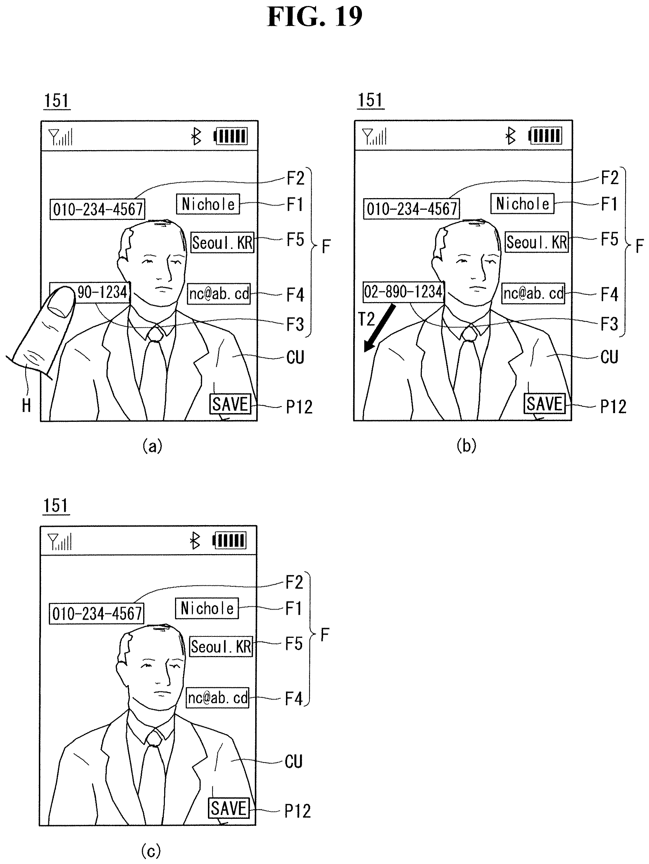

FIGS. 19, 20, 21 and 22 illustrate the operation S40 of processing the acquired information, shown in FIG. 5.

As shown in FIGS. 19, 20, 21 and 22, the controller (180 shown in FIG. 1) of the mobile terminal 100 may process and store the information received from the mobile terminal (100a shown in FIG. 11) of the other user and displayed on the display module 151.

Referring to FIG. 19 (a), the display module 151 may display the captured image CU and the first through fifth fields F1 through F5. The first through fifth fields F1 through F5 may correspond to the information received from the mobile terminal (100a shown in FIG. 11) of the other user. The user may not want to store the third field F3. In this case, the user may touch the third field F3.

Referring to FIG. 19 (b), the user may drag the third field F3 in a second touch direction T2. The second touch direction T2 may face the outside of the display module 151 from the point at which the third field F3 is displayed. That is, the user can touch the third field F3 as if the user throws the third field F3 out of the display module 151 so as to process the third field F3.

Referring to FIG. 19 (c), the display of the third field F3 on the display module 151 may be cancelled through a touch of the user. The user may touch the twelfth pop-up window P12 to end edition of the field F and store the current state.

As shown in FIGS. 19 (a), (b) and (c), the user can touch the display module 151 to process the fields F, and thus the user can intuitively operate the mobile terminal 100 to select desired information.

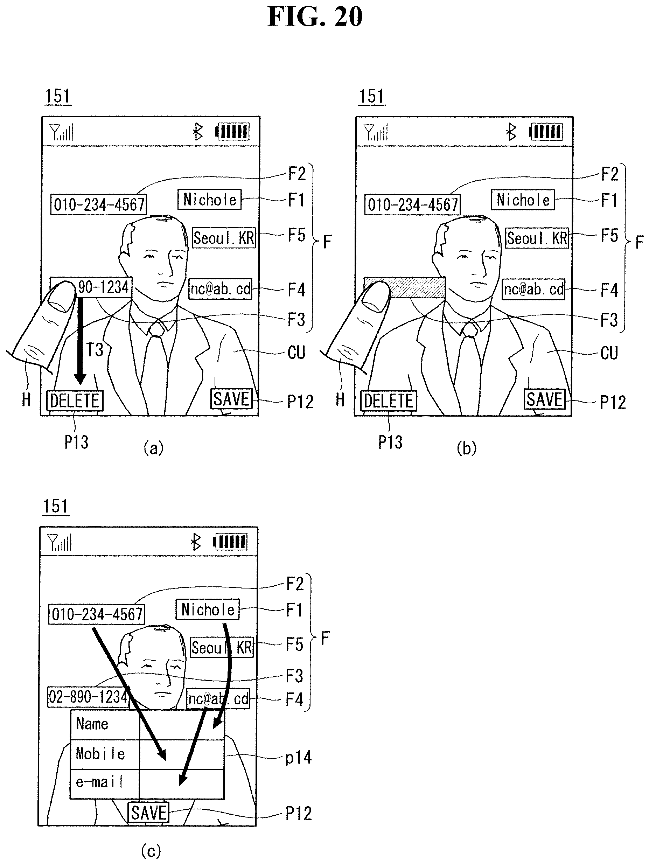

Referring to FIG. 20 (a), the display module 151 may display a thirteenth pop-up window P13. The thirteenth pop-up window P13 corresponds to a button for deleting a dropped field. The user may touch the third field F3 with the finger H and drag and drop the third field F3 to the thirteenth pop-up window P13. The user can recognize that a corresponding field is deleted when a predetermined region of the display module 151 is set to a delete region and the corresponding field is dragged and dropped to the delete region. Accordingly, the user can edit the displayed fields F more intuitively.

Referring to FIG. 20 (b), the user may touch a specific field to select desired fields to be stored. That is, the user can touch the third field F3 when the user does not want to store the third field F3. The color of the touched third field F3 may be changed to a color different from the color of untouched fields. The field touched by the user may not be stored in the memory (160 shown in FIG. 1) even when the twelfth pop-up window P12 is touched to perform the storing function. The user can visually recognize the field in the changed color to intuitively discriminate the dropped field from stored fields.

Referring to FIG. 20 (c), the display module 151 may display a fourteenth pop-up window P14. The fourteenth pop-up window P14 may display a predetermined list. The list may arrange contents to be stored in the mobile terminal 100. The user may drag fields corresponding to items of the list among the displayed fields F and drop the fields to the list. For example, when the user drags and drops the first field F1 to the first item of the fourteenth pop-up window P14, the information corresponding to the first field F1 is moved to the first item of the list and displayed.

The field, temporarily deleted from the display module 151 according to the user, may be displayed again.

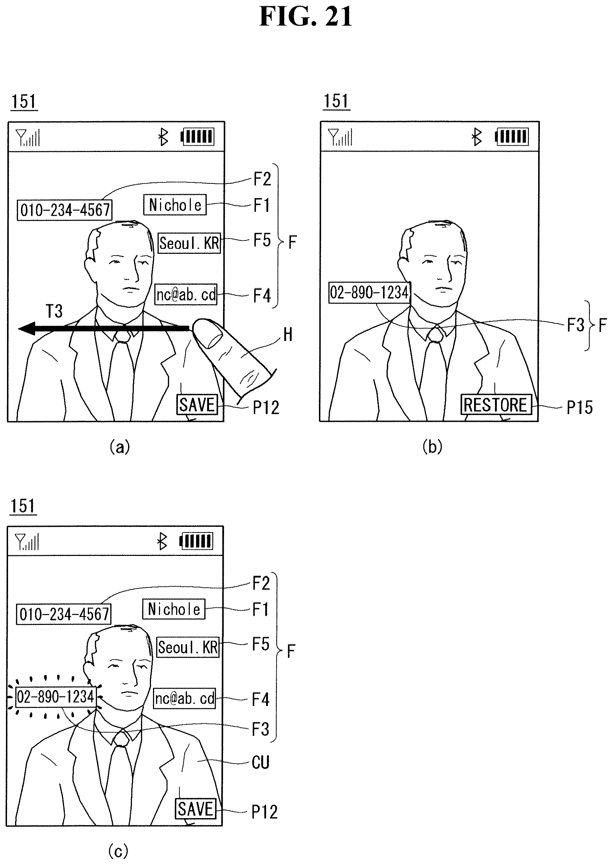

Referring to FIG. 21 (a), the mobile terminal 100 is in a state that display of the third field F3 is cancelled. The user may want to display the third field F3 again although the user has cancelled display of the third field F3 through the above-described operation. In this case, the user may drag the display module 151 in a third touch direction T3. The third touch direction T3 may correspond to a direction of traversing the display module 151 in the horizontal direction.

Referring to FIG. 21 (b), when the touch in the third touch direction T3 is input, the controller (180 shown in FIG. 1) may display the temporarily deleted third field F3 on the display module 151. Furthermore, the display module 151 may display a fifteenth pop-up window P15. The fifteenth pop-up window P15 may correspond to a button for re-displaying a temporarily deleted field. The user may select the third field F3 first and then select the fifteenth pop-up window P15.

Referring to FIG. 21 (c), the third field F3 is re-displayed on the display module 151 through the aforementioned process. When fields to be stored are determined through the above-described operations, the user may select the twelfth pop-up window P12 to store the fields.

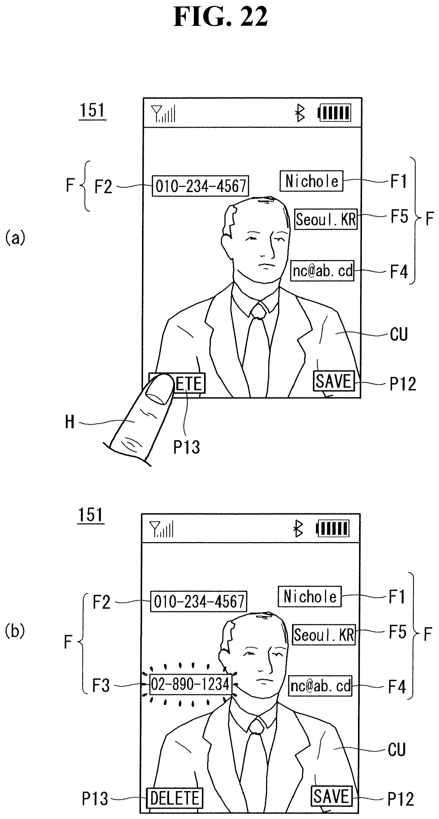

Referring to FIG. 22 (a), the thirteenth pop-up window P13 may be touched to re-display the temporarily cancelled field on the display module 151. The thirteenth pop-up window P13 is the button for deleting a field dragged and dropped thereto, as described above. When the user touches the thirteenth pop-up window P13 with the finger H, as shown in FIG. 22 (a), deleted fields may be re-displayed in the order opposite to the deleting order. For example, when the user deleted the third field F3 through a drag-and-drop operation, the third field F3 can be re-displayed on the display module 151 if the user touches the thirteenth pop-up window P13.

Referring to FIG. 22 (b), the third field F3 is displayed on the display module 151 by touching the thirteenth pop-up window P13.

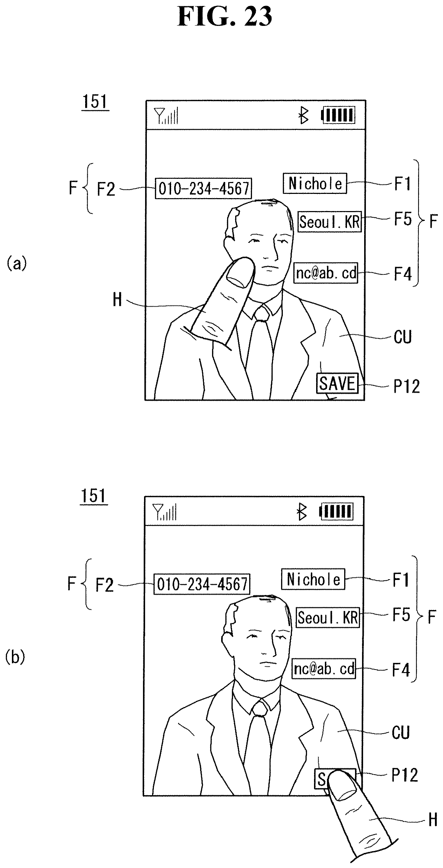

As shown in FIG. 23(a) and 23(b), the user may touch a specific region of the display module 151 to store the processed field in the memory (160 shown in FIG. 1).

Referring to FIG. 23 (a), the user may touch the captured image CU with the finger H. The touch applied to the captured image CU may be a long touch or a double touch applied to a point. When the touch applied to the captured image CU is input, the controller (180 shown in FIG. 1) may store the information currently displayed on the display module 151 with the captured image CU. The stored information and captured image CU may be searched and displayed on the display module 151 if required.

Referring to FIG. 23 (b), the user may touch the twelfth pop-up window P12 to store the information in the memory (160 shown in FIG. 1).

Although deletion of information and re-display of deleted information are explained as examples of processing the information about the other user in the above description, processing the information can include various operations such as changing information arrangement, addition of information, edition of information, etc.

Furthermore, though the case that the user's operation is performed on a specific field is explained in the above description, it is also possible to process and store information acquired from the mobile terminal of the other user.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of this document. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal(100) comprising:
a display module(151) configured to display information;
a camera(121) configured to capture an image of a person;
a short-range communication module(114) configured to perform near field communication with at least one other mobile terminal(100a) in order to acquire information items corresponding to the captured image(CU); and a controller(180) configured to :
control the display module to display the captured image(CU) and at least one of the acquired information items, **characterized in that** the controller (180) is further configured to:
receive a first touch selection to select one or more of the displayed at least one information item, the first touch selection comprising a drag and drop to the selected one or more information item,
delete the one or more information item selected by the first touch selection,
receive a second touch selection to select one or more of the deleted information item, the second touch selection comprising swiping the display module over a predetermined length or touching the delete icon, and
restore the one or more information item selected by the second touch selection and display the one or more information item selected by the second touch selection,
wherein the at least one of the acquired information items is arranged around the displayed captured image(CU).

2. The mobile terminal(100) of claim 1, wherein the controller(180) is further configured to control the display module to arrange the at least one of the acquired information items along an outline of the displayed captured image(CU).

3. The mobile terminal(100) of claim 2, wherein the controller(180) is further configured to receive a signal for selecting at least one of the arranged information items and to control the display module to change the display of the selected at least one of the arranged information items.

4. The mobile terminal of claim 3, wherein the signal corresponds to a drag, a flicking, a drag-and-drop, or a touch from the selected at least one of the arranged information items as a starting point.

5. The mobile terminal of claim 3, wherein changing the display of the selected at least one of the arranged information items comprises at least deleting the at least one of the arranged information items from the display module, re-displaying a previously deleted information item or changing the arrangement of the selected at least one of the arranged information items.

6. The mobile terminal of claim 2, wherein the controller(180) is further configured to control the display module to arrange the at least one of the acquired information items in real time.

7. The mobile terminal of claim 2, wherein multiple information items are acquired and the controller(180) is further configured to control the display module to display the acquired multiple information items along the outline of the captured image(CU) such that the multiple information items are displayed apart from each other.

8. The mobile terminal of claim 1, wherein the controller(180) is further configured to store at least one of the acquired information items with the captured image(CU) in a memory upon receiving a storage signal.

9. The mobile terminal of claim 8, wherein the controller(180) is further configured to store the at least one of the acquired information items such that the stored at least one of the acquired information items corresponds to attributes of fields of a phonebook previously stored in the memory.

10. The mobile terminal of claim 8, wherein the at least one of the acquired information items corresponds to information being displayed on the display module when the storage signal is received.

11. The mobile terminal of claim 8, wherein the storage signal corresponds to a touch applied to the displayed captured image(CU).

12. The mobile terminal of claim 1, wherein the information items corresponding to the captured image(CU) include at least a name, a phone number, an email address, a home page address, a home address, a work place address, or an SNS ID.

13. The mobile terminal of claim 1, wherein the short-range communication module is further configured to search for the at least one other mobile terminal(100a) having information about a person in the captured image(CU) in order to acquire the information items corresponding to the captured image(CU).

14. The mobile terminal of claim 1, wherein the controller(180) is further configured to:
search for other mobile terminals(100a) located within a predetermined range within which the other mobile terminals(100a) can perform near field communication with the mobile terminal;
control the display module to display the searched other mobile terminals(100a);
control the short range communication module to acquire information items from a selected at least one of the displayed searched other mobile terminals(100a); and
control the display module to display at least one of the acquired information items.

15. A method of displaying information in a mobile terminal(100), the method comprising:
capturing an image of a person via a camera(121);
performing near field communication with at least one other mobile terminal(100a) via a short-range communication module(114) in order to acquire information items related to the person in the captured image(CU); and
displaying at least one of the acquired information items with the captured image, wherein the at least one of the acquired information items is arranged around the displayed captured image(CU), **characterized by**:
receiving a first touch selection to select one or more of the displayed at least one information item, the first touch selection comprising a drag and drop to the selected one or more information item,
deleting the one or more information item selected by the first touch selection,
receiving a second touch selection to select one or more of the deleted information item, the second touch selection comprising swiping the display module over a predetermined length or touching the delete icon, and
restoring the one or more information item selected by the second touch selection and display the one or more information item selected by the second touch selection.

## Patentansprüche

1. Mobiles Endgerät (100), welches Folgendes aufweist:
ein Anzeigemodul (151), das dafür ausgelegt ist, Informationen anzuzeigen,
eine Kamera (121), die dafür ausgelegt ist, ein Bild einer Person aufzunehmen,
ein Kurzstreckenkommunikationsmodul (114), das dafür ausgelegt ist, eine Nahfeldkommunikation mit wenigstens einem anderen mobilen Endgerät (100a) auszuführen, um Informationsbestandteile zu erhalten, die dem aufgenommenen Bild (CU) entsprechen, und
eine Steuereinrichtung (180), die dafür ausgelegt ist, Folgendes auszuführen:
Steuern des Anzeigemoduls, um das aufgenommene Bild (CU) und wenigstens einen der erhaltenen Informationsbestandteile anzuzeigen,
**dadurch gekennzeichnet, dass** die Steuereinrichtung (180) ferner dafür ausgelegt ist, Folgendes auszuführen:
Empfangen einer ersten Berührungsauswahl zur Auswahl eines oder mehrerer von dem einen oder den mehreren angezeigten Informationsbestandteilen, wobei die erste Berührungsauswahl ein Drag-and-drop zum einen oder zu den mehreren ausgewählten Informationsbestandteilen umfasst,
Löschen des einen oder der mehreren durch die erste Berührungsauswahl ausgewählten Informationsbestandteile,
Empfangen einer zweiten Berührungsauswahl zur Auswahl eines oder mehrerer der gelöschten Informationsbestandteile, wobei die zweite Berührungsauswahl ein Wischen des Anzeigemoduls über eine vorgegebene Strecke oder ein Berühren des gelöschten Bildzeichens umfasst, und
Wiederherstellen des einen oder der mehreren durch die zweite Berührungsauswahl ausgewählten Informationsbestandteile und Anzeigen des einen oder der mehreren durch die zweite Berührungsauswahl ausgewählten Informationsbestandteile,
wobei der wenigstens eine der erhaltenen Informationsbestandteile um das angezeigte aufgenommene Bild (CU) angeordnet wird.

2. Mobiles Endgerät (100) nach Anspruch 1, wobei die Steuereinrichtung (180) ferner dafür ausgelegt ist, das Anzeigemodul zu steuern, um den wenigstens einen der erhaltenen Informationsbestandteile entlang dem Umriss des angezeigten aufgenommenen Bilds (CU) anzuordnen.

3. Mobiles Endgerät (100) nach Anspruch 2, wobei die Steuereinrichtung (180) ferner dafür ausgelegt ist, ein Signal zur Auswahl wenigstens eines der angeordneten Informationsbestandteile zu empfangen und das Anzeigemodul zu steuern, um die Anzeige des ausgewählten wenigstens einen der angeordneten Informationsbestandteile zu ändern.

4. Mobiles Endgerät nach Anspruch 3, wobei das Signal einem Ziehen, einem Schnipsen, einem Drag-and-drop oder einer Berührung des ausgewählten wenigstens einen der angeordneten Informationsbestandteile als Ausgangspunkt entspricht.

5. Mobiles Endgerät nach Anspruch 3, wobei beim Ändern der Anzeige des ausgewählten wenigstens einen der angeordneten Informationsbestandteile der wenigstens eine der angeordneten Informationsbestandteile vom Anzeigemodul gelöscht wird, ein zuvor gelöschter Informationsbestandteil neu angezeigt wird und/oder die Anordnung des ausgewählten wenigstens einen der angeordneten Informationsbestandteile geändert wird.

6. Mobiles Endgerät nach Anspruch 2, wobei die Steuereinrichtung (180) ferner dafür ausgelegt ist, das Anzeigemodul zu steuern, um den wenigstens einen der erhaltenen Informationsbestandteile in Echtzeit anzuordnen.

7. Mobiles Endgerät nach Anspruch 2, wobei mehrere Informationsbestandteile erhalten werden und die Steuereinrichtung (180) ferner dafür ausgelegt ist, das Anzeigemodul zu steuern, um die erhaltenen mehreren Informationsbestandteile entlang dem Umriss des aufgenommenen Bilds (CU) anzuzeigen, so dass die mehreren Informationsbestandteile voneinander getrennt angezeigt werden.

8. Mobiles Endgerät nach Anspruch 1, wobei die Steuereinrichtung (180) ferner dafür ausgelegt ist, zumindest einen der erhaltenen Informationsbestandteile mit dem aufgenommenen Bild (CU) nach dem Empfang eines Speichersignals in einem Speicher zu speichern.

9. Mobiles Endgerät nach Anspruch 8, wobei die Steuereinrichtung (180) ferner dafür ausgelegt ist, den wenigstens einen der erhaltenen Informationsbestandteile zu speichern, so dass der wenigstens eine der gespeicherten Informationsbestandteile Attributfeldern eines zuvor im Speicher gespeicherten Telefonbuchs entspricht.

10. Mobiles Endgerät nach Anspruch 8, wobei der wenigstens eine der erhaltenen Informationsbestandteile Informationen entspricht, die auf dem Anzeigemodul angezeigt werden, wenn das Speichersignal empfangen wird.

11. Mobiles Endgerät nach Anspruch 8, wobei das Speichersignal einer auf das angezeigte aufgenommene Bild (CU) angewendeten Berührung entspricht.

12. Mobiles Endgerät nach Anspruch 1, wobei die Informationsbestandteile, die dem aufgenommenen Bild (CU) entsprechen, wenigstens einen Namen, eine Telefonnummer, eine E-Mail-Adresse, eine Homepage-Adresse, eine Wohnadresse, eine berufliche Adresse oder eine SNS-Kennung einschließen.

13. Mobiles Endgerät nach Anspruch 1, wobei das Kurzstreckenkommunikationsmodul ferner dafür ausgelegt ist, nach dem wenigstens einen anderen mobilen Endgerät (100a) mit Informationen über eine Person im aufgenommenen Bild (CU) zu suchen, um die dem aufgenommenen Bild (CU) entsprechenden Informationsbestandteile zu erhalten.

14. Mobiles Endgerät nach Anspruch 1, wobei die Steuereinrichtung (180) ferner dafür ausgelegt ist, Folgendes auszuführen:
Suchen nach anderen mobilen Endgeräten (100a), die sich innerhalb eines vorgegebenen Bereichs befinden, innerhalb dessen die anderen mobilen Endgeräte (100a) eine Nahfeldkommunikation mit dem mobilen Endgerät ausführen können,
Steuern des Anzeigemoduls, um die gesuchten anderen mobilen Endgeräte (100a) anzuzeigen,
Steuern des Kurzstreckenkommunikationsmoduls, um Informationsbestandteile von einem ausgewählten wenigstens einen der angezeigten gesuchten anderen mobilen Endgeräte (100a) zu erhalten, und
Steuern des Anzeigemoduls, um zumindest einen der erhaltenen Informationsbestandteile anzuzeigen.

15. Verfahren zum Anzeigen von Informationen in einem mobilen Endgerät (100), wobei das Verfahren Folgendes aufweist:
Aufnehmen eines Bilds einer Person durch eine Kamera (121),
Ausführen einer Nahfeldkommunikation mit wenigstens einem anderen mobilen Endgerät (100a) über ein Kurzstreckenkommunikationsmodul (114), um Informationsbestandteile zu erhalten, die sich auf die Person im aufgenommenen Bild (CU) beziehen, und
Anzeigen wenigstes eines der erhaltenen Informationsbestandteile mit dem aufgenommenen Bild, wobei der wenigstens eine der erhaltenen Informationsbestandteile um das angezeigte aufgenommene Bild (CU) angeordnet ist,
**gekennzeichnet durch**:
Empfangen einer ersten Berührungsauswahl zur Auswahl eines oder mehrerer von dem einen oder den mehreren angezeigten Informationsbestandteilen, wobei die erste Berührungsauswahl ein Drag-and-drop zum einen oder zu den mehreren ausgewählten Informationsbestandteilen umfasst,
Löschen des einen oder der mehreren durch die erste Berührungsauswahl ausgewählten Informationsbestandteile,
Empfangen einer zweiten Berührungsauswahl zur Auswahl eines oder mehrerer der gelöschten Informationsbestandteile, wobei die zweite Berührungsauswahl ein Wischen des Anzeigemoduls über eine vorgegebene Strecke oder ein Berühren des gelöschten Bildzeichens umfasst, und
Wiederherstellen des einen oder der mehreren durch die zweite Berührungsauswahl ausgewählten Informationsbestandteile und Anzeigen des einen oder der mehreren durch die zweite Berührungsauswahl ausgewählten Informationsbestandteile.

## Revendications

1. Terminal mobile (100) comprenant :
un module d'affichage (151) configuré pour afficher des informations ;
une caméra (121) configurée pour capturer une image d'une personne ;
un module de communication à courte portée (114) configuré pour effectuer une communication en champ proche avec au moins un autre terminal mobile (100a) de manière à acquérir des éléments d'information correspondant à l'image capturée (CU) ; et
un dispositif de commande (180) configuré pour :
commander le module d'affichage pour afficher l'image capturée (CU) et au moins un des éléments d'information acquis,
**caractérisé en ce que** le dispositif de commande (180) est configuré en outre pour :
recevoir une première sélection tactile pour sélectionner un ou plusieurs de l'au moins un élément d'information affiché, la première sélection tactile comprenant un glisser-déposer sur celui sélectionné de l'un ou plusieurs éléments d'informations,
supprimer l'un ou plusieurs éléments d'information sélectionnés par la première sélection tactile,
recevoir une deuxième sélection tactile pour sélectionner un ou plusieurs des éléments d'information supprimés, la deuxième sélection tactile comprenant un balayage du module d'affichage sur une distance prédéterminée ou un toucher de l'icône de suppression, et
restaurer l'un ou plusieurs éléments d'informations sélectionnés par la deuxième sélection tactile et afficher l'un ou plusieurs éléments d'informations sélectionnés par la deuxième sélection tactile,
dans lequel l'au moins un des éléments d'information acquis est agencé autour de l'image capturée (CU) affichée.

2. Terminal mobile (100) selon la revendication 1, dans lequel le dispositif de commande (180) est configuré en outre pour commander le module d'affichage pour agencer l'au moins un des éléments d'information acquis le long d'un contour de l'image capturée (CU) affichée.

3. Terminal mobile (100) selon la revendication 2, dans lequel le dispositif de commande (180) est configuré en outre pour recevoir un signal pour sélectionner au moins un des éléments d'information agencés et pour commander le module d'affichage pour changer l'affichage de l'au moins un sélectionné des éléments d'information agencés.

4. Terminal mobile selon la revendication 3, dans lequel le signal correspond à un glissement, un léger mouvement, un glisser-déposer ou un toucher à partir de l'au moins un sélectionné des éléments d'information agencés comme un point de départ.

5. Terminal mobile selon la revendication 3, dans lequel le changement de l'affichage de l'au moins un sélectionné des éléments d'information agencés comprend au moins la suppression de l'au moins un des éléments d'information agencés du module d'affichage, le nouvel affichage d'un élément d'information précédemment supprimé ou le changement de l'agencement de l'au moins un sélectionné des éléments d'information agencés.

6. Terminal mobile selon la revendication 2, dans lequel le dispositif de commande (180) est configuré en outre pour commander le module d'affichage pour agencer l'au moins un des éléments d'information acquis en temps réel.

7. Terminal mobile selon la revendication 2, dans lequel de multiples éléments d'information sont acquis et le dispositif de commande (180) est configuré en outre pour commander le module d'affichage pour afficher les multiples éléments d'information acquis le long du contour de l'image capturée (CU) de manière que les multiples éléments d'information soient affichés écartés les uns des autres.

8. Terminal mobile selon la revendication 1, dans lequel le dispositif de commande (180) est configuré en outre pour stocker au moins un des éléments d'information acquis avec l'image capturée (CU) dans une mémoire à la réception d'un signal de stockage.

9. Terminal mobile selon la revendication 8, dans lequel le dispositif de commande (180) est configuré en outre pour stocker l'au moins un des éléments d'information acquis de manière que l'au moins un stocké des éléments d'information acquis corresponde à des attributs de champs d'un répertoire précédemment stocké dans la mémoire.

10. Terminal mobile selon la revendication 8, dans lequel l'au moins un des éléments d'information acquis correspond à des informations qui sont affichées sur le module d'affichage quand le signal de stockage est reçu.

11. Terminal mobile selon la revendication 8, dans lequel le signal de stockage correspond à un toucher appliqué à l'image capturée (CU) affichée.

12. Terminal mobile selon la revendication 1, dans lequel les éléments d'information correspondant à l'image capturée (CU) comprennent au moins un nom, un numéro de téléphone, une adresse de courrier électronique, une adresse de page d'accueil, une adresse du domicile, une adresse de lieu de travail ou un ID SNS.

13. Terminal mobile selon la revendication 1, dans lequel le module de communication à courte portée est configuré en outre pour rechercher l'au moins un autre terminal mobile (100a) ayant des informations sur une personne dans l'image capturée (CU) de manière à acquérir les éléments d'information correspondant à l'image capturée (CU).

14. Terminal mobile selon la revendication 1, dans lequel le dispositif de commande (180) est configuré en outre pour :
rechercher d'autres terminaux mobiles (100a) situés dans une portée prédéterminée dans laquelle les autres terminaux mobiles (100a) peuvent effectuer une communication en champ proche avec le terminal mobile ;
commander le module d'affichage pour afficher les autres terminaux mobiles (100a) recherchés ;
commander le module de communication à courte portée pour acquérir des éléments d'information à partir d'au moins un sélectionné des autres terminaux mobiles (100a) recherchés affichés ; et
commander le module d'affichage pour afficher au moins un des éléments d'information acquis.

15. Procédé d'affichage d'informations dans un terminal mobile (100), le procédé comprenant :
la capture d'une image d'une personne par le biais d'une caméra (121) ;
l'exécution d'une communication en champ proche avec au moins un autre terminal mobile (100a) par le biais d'un module de communication à courte portée (114) de manière à acquérir des éléments d'information relatifs à la personne dans l'image capturée (CU) ; et
l'affichage d'au moins un des éléments d'information acquis avec l'image capturée, dans lequel l'au moins un des éléments d'information acquis est agencé autour de l'image capturée (CU) affichée,
**caractérisé par** :
la réception d'une première sélection tactile pour sélectionner un ou plusieurs de l'au moins un élément d'information affiché, la première sélection tactile comprenant un glisser-déposer sur celui sélectionné de l'un ou plusieurs éléments d'informations,
la suppression de l'un ou plusieurs éléments d'information sélectionnés par la première sélection tactile,
la réception d'une deuxième sélection tactile pour sélectionner un ou plusieurs des éléments d'information supprimés, la deuxième sélection tactile comprenant un balayage du module d'affichage sur une distance prédéterminée ou un toucher de l'icône de suppression, et
le rétablissement de l'un ou plusieurs éléments d'informations sélectionnés par la deuxième sélection tactile et afficher l'un ou plusieurs éléments d'informations sélectionnés par la deuxième sélection tactile.
